# EUROPÄISCHE PATENTSCHRIFT

(11) **EP 4 231 322 B1**
(45) Veröffentlichungstag und Bekanntmachung des Hinweises auf die Patenterteilung: **18.06.2025**
(21) Anmeldenummer: 23155937.8
(22) Anmeldetag: 10.02.2023
(51) Int. Cl.: H01H 31/12, H01H 9/10

(54) **SICHERUNGSLASTTRENNSCHALTER, INSBESONDERE NH-SICHERUNGSLASTTRENNSCHALTER**
FUSE LOAD BREAK SWITCH, IN PARTICULAR NH FUSE LOAD BREAK SWITCH
SECTIONNEUR DE COUPURE EN CHARGE DE SÉCURITÉ, EN PARTICULIER SECTIONNEUR DE COUPURE EN CHARGE DE SÉCURITÉ NH

(30) Priorität: 18.02.2022 DE 102022103915
(43) Veröffentlichungstag der Anmeldung: 23.08.2023
(73) Patentinhaber: Klaus Bruchmann GmbH, 96110 Scheßlitz (DE)
(72) Erfinder: Bruchmann, Klaus E., 96110 Scheßlitz (DE)
(74) Vertreter: Appelt, Christian W.

(56) Entgegenhaltungen:
- DE-A1- 102005 017 672
- DE-A1- 102006 059 614
- DE-A1- 102008 016 648
- DE-B3- 102007 043 143
- DE-U1- 202020 105 647

## Beschreibung

Die vorliegende Erfindung bezieht sich auf einen Sicherungslasttrennschalter und insbesondere auf einen NH-Sicherungslasttrennschalter (Niederspannungs-Hochleistungs-Sicherungslasttrennschalter). Solche Sicherungslasttrennschalter eignen sich insbesondere zum Anschluss von elektrischen Geräten, und sie werden insbesondere zum Schutz vor Überströmen und Kurzschlüssen eingesetzt.

Ähnliche Systeme sind beispielsweise aus EP 2 584 577 B1 oder EP 3 016 122 A1 bekannt. Insbesondere sind Sicherungslasttrennschalter bekannt, die ein Basiselement und ein Deckelelement zum Öffnen oder Schließen des Sicherungslasttrennschalters umfassen. Ferner beschreibt DE 103 15 503 B3 ein Installationsgerät für Sammelschienen, das mittels Hakenteilen an Sammelschienen einhängbar ist und das mindestens zwei Verriegelungselemente mit Klemmabsätzen zum Befestigen von Sammelschienen unterschiedlicher Breite aufweist.

Ferner ist aus der DE 20 2020 105 647 U1 ein Sicherungslasttrennschalter mit einem Basiselement und einem Deckelelement bekannt, wobei ferner ein Verriegelungselement zum Verriegeln des Deckelelements mit dem Basiselement vorgesehen ist. Das Verriegelungselemente ist zwischen zwei Positionen verschiebbar, wobei das Deckelelement in dem geschlossenen Zustand verriegelt werden kann, wenn sich das Verriegelungselemente in einer ersten Position befindet, während das Verriegelungselement in eine zweite Position bewegt werden kann, wenn eine Verriegelung des Deckelelements nicht gewünscht ist, wobei in dieser zweiten Position das Verriegelungselemente nicht über die äußere Oberfläche des Deckelelements hinaus ragt, sodass das Gesamtvolumen des Sicherungslasttrennschalter verkleinert wird.

Es ist eine Aufgabe der vorliegenden Erfindung, Sicherungslasttrennschalter zur Befestigung an Sammelschienen unterschiedlicher Breiten im Hinblick auf die Nutzerfreundlichkeit und unter Berücksichtigung der gewünschten Anwendungen weiter zu verbessern.

Diese Aufgabe wird durch einen Sicherungslasttrennschalter nach Anspruch 1 gelöst. Die Ansprüche 2 bis 13 betreffen besonders vorteilhafte Realisierungen des Sicherungslasttrennschalters nach Anspruch 1.

Gemäß der Erfindung umfasst ein Sicherungslasttrennschalter zur Befestigung an Sammelschienen einer oder mehrerer unterschiedlicher Breiten ein Basiselement, ein Deckelelement, ein Hakenteil, eine Rastvorrichtung und ein erstes Federelement. Die Rastvorrichtung umfasst einen Klemmabschnitt zum Verklemmen oder Einspannen einer Sammelschiene zwischen dem Klemmabschnitt und dem Hakenteil sowie einen Arretierungsabschnitt zur lösbaren Arretierung der Rastvorrichtung an dem Basiselement in einer Arretierungsposition. Das Deckelelement ist relativ zu dem Basiselement zwischen einer geöffneten Position und einer geschlossenen Betriebsposition hin und her bewegbar angeordnet. Die Rastvorrichtung ist relativ zu dem Basiselement hin und her bewegbar angeordnet zwischen der Arretierungsposition zum Anordnen des Sicherungslasttrennschalters relativ zu einer Sammelschiene, so dass die Sammelschiene zwischen dem Klemmabschnitt und dem Hakenteil positioniert werden kann, und einer oder mehreren Klemmpositionen zum Verklemmen oder Einspannen der Sammelschiene zwischen dem Klemmabschnitt und dem Hakenteil. Das erste Federelement ist so ausgebildet, dass es die Rastvorrichtung in jeder Position in Richtung des Hakenteils vorspannt. Der Sicherungslasttrennschalter ist so ausgebildet, dass eine Arretierung der Rastvorrichtung in der Arretierungsposition verhindert und/oder gelöst wird, wenn das Deckelelement sich in seiner geschlossenen Betriebsposition befindet oder in die geschlossene Betriebsposition gebracht wird.

Der Sicherungslasttrennschalter kann insbesondere ein NH-Sicherungslasttrennschalter mit NH-Sicherungseinsätzen (Niederspannungs-Hochleistungssicherungseinsätzen) sein. Die NH-Sicherungseinsätze können in das Deckelelement einsetzbar und wieder entfernbar sein. Der Sicherungslasttrennschalter kann an Sammelschienen befestigt werden, insbesondere können mehrere solcher Sicherungslasttrennschalter nebeneinander an den Sammelschienen befestigt werden. Der Sicherungslasttrennschalter kann mehrpolig, bevorzugt 3-polig sein, und kann an mehreren, bevorzugt an drei Sammelschienen, die jeweils einem Pol entsprechen, montiert werden. Der Sicherungslasttrennschalter kann mehrere Hakenteile aufweisen, insbesondere kann ein 3-poliger Sicherungslasttrennschalter drei Hakenteile jeweils zur Montage an einer der drei Sammelschienen aufweisen.

Das Deckelelement ist in einem Betriebszustand des Sicherungslasttrennschalters in der geschlossenen Betriebsposition angeordnet. Wenn das Deckelelement in der geschlossenen Betriebsposition angeordnet ist, muss der Sicherungslasttrennschalter aber nicht notwendigerweise in dem Betriebszustand sein, sondern kann auch z. B. in einem freigeschalteten Zustand sein, in dem die NH-Sicherungseinsätze aus dem Deckelelement entfernt wurden. Der freigeschaltete Zustand kann z. B. erreicht werden, indem das Deckelelement geöffnet wird, die Sicherungseinsätze aus dem Deckelelement entfernt werden und das Deckelelement anschließend wieder geschlossen wird. In dem freigeschalteten Zustand können z. B. Wartungsarbeiten an dem Sicherungslasttrennschalter, der Sammelschiene oder einem an dem Sicherungslasttrennschalter angeschlossenen elektrischen Gerät spannungsfrei durchgeführt werden.

Die Rastvorrichtung umfasst einen Klemmabschnitt zum Verklemmen oder Einspannen einer Sammelschiene zwischen dem Klemmabschnitt und einem Hakenteil. Insbesondere kann der Sicherungslasttrennschalter an einer Sammelschiene befestigt oder montiert werden, indem die Sammelschiene zwischen dem Klemmabschnitt und dem Hakenteil eingespannt wird. Ferner umfasst die Rastvorrichtung einen Arretierungsabschnitt zur lösbaren Arretierung der Rastvorrichtung an dem Basiselement in einer Arretierungsposition. Das heißt, der Arretierungsabschnitt ist zur Arretierung der Rastvorrichtung an dem Basiselement in der Arretierungsposition und zur Lösung der Arretierung der Rastvorrichtung konfiguriert. Die Arretierung der Rastvorrichtung kann beispielsweise gelöst werden, indem ein Benutzer den Arretierungsabschnitt oder einen Teil des Arretierungsabschnitts (z. B. ein Hakenelement oder eine Neigungsfläche eines Hakenelements) kontaktiert, berührt, betätigt, bewegt und/oder eine Kraft darauf ausübt. Wenn die Rastvorrichtung in der Arretierungsposition arretiert ist, kann der Sicherungslasttrennschalter relativ zu einer Sammelschiene angeordnet oder positioniert werden oder mittels des Hakenteils an einer Sammelschiene eingehängt werden, so dass die Sammelschiene zwischen dem Klemmabschnitt und dem Hakenteil positioniert werden kann. Insbesondere kann, wenn die Rastvorrichtung in der Arretierungsposition angeordnet ist, ein Abstand zwischen dem Klemmabschnitt und dem Hakenteil größer sein als eine Höhe der Sammelschiene, so dass die Sammelschiene in einem Bereich zwischen dem Klemmabschnitt und dem Hakenteil positioniert werden kann. Umgekehrt kann natürlich, wenn die Rastvorrichtung in der Arretierungsposition angeordnet ist, eine Sammelschiene aus dem Bereich zwischen dem Klemmabschnitt und dem Hakenteil entnommen werden, so dass der Sicherungslasttrennschalter von der Sammelschiene gelöst oder entfernt werden kann.

Die Rastvorrichtung ist relativ zu dem Basiselement zwischen der Arretierungsposition und einer oder mehreren Klemmposition linear verschiebbar angeordnet. Alternativ kann die Rastvorrichtung auch an dem Basiselement befestigt und relativ zu dem Basiselement zwischen der Arretierungsposition und der Klemmposition um eine Rastvorrichtungs-Rotationsachse schwenkbar angeordnet sein. Wenn sich die Rastvorrichtung in einer Klemmposition befindet, kann ein Abstand zwischen dem Klemmabschnitt der Rastvorrichtung und einem Hakenteil kleiner sein als wenn die Rastvorrichtung in der Arretierungsposition angeordnet ist, und dieser kleinere Abstand kann einer Höhe einer Sammelschiene entsprechen, an welcher der Sicherungslasttrennschalter befestigt werden kann. Die mehreren Klemmpositionen können ferner mehreren Breiten von Sammelschienen entsprechen, an denen der Sicherungslastrennschalter befestigt werden kann, wie weiter unten im Zusammenhang mit den mehreren Klemmabsätzen ausführlicher beschrieben wird.

Das Federelement ist so ausgebildet, dass es die Rastvorrichtung in jeder Position in Richtung des Hakenteils vorspannt. Wenn z. B. die Rastvorrichtung in der Rastposition angeordnet ist und die Arretierung der Rastvorrichtung in dieser Position gelöst wird, kann das Federelement eine erste Federkraft auf die Rastvorrichtung ausüben, um die Rastvorrichtung von der Arretierungsposition in eine Klemmposition zu bewegen. Wenn die Rastvorrichtung in einer Klemmposition angeordnet ist und eine Sammelschiene zwischen dem Klemmabschnitt und dem Hakenteil positioniert ist, kann das Federelement eine erste Federkraft auf die Rastvorrichtung ausüben, um die Sammelschiene zwischen dem Klemmabschnitt und dem Hakenteil zu verklemmen. Das erste Federelement kann zum Beispiel eine Spiralfeder sein. Das erste Federelement kann einstückig mit der Rastvorrichtung oder mit einem Teil der Rastvorrichtung ausgebildet sein (z. B. mit dem Klemmabschnitt oder einem ersten oder zweiten Rastelement, wie weiter unten beschrieben).

Wie oben erwähnt, ist der Sicherungslasttrennschalter so ausgebildet, dass eine Arretierung der Rastvorrichtung in der Arretierungsposition verhindert und/oder gelöst wird, wenn das Deckelelement sich in seiner geschlossenen Betriebsposition befindet oder in die geschlossene Betriebsposition gebracht wird. Insbesondere kann der Sicherungslasttrennschalter so ausgebildet sein, dass eine Arretierung der Rastvorrichtung in der Arretierungsposition verhindert wird, wenn das Deckelelement sich in seiner geschlossenen Betriebsposition befindet, und der Sicherungslasttrennschalter kann ferner so ausgebildet sein, dass eine Arretierung der Rastvorrichtung in der Arretierungsposition automatisch gelöst wird, wenn das Deckelelement, z. B. von der geöffneten Position, in die geschlossene Betriebsposition gebracht wird. Insbesondere kann, wenn das Deckelelement in die geschlossene Betriebsposition bewegt wird, das Deckelelement oder ein Teil des Deckelelements (z. B. eine Deckel-Seitenwand oder eine Deckel-Kante oder ein Vorsprungselement in einem Innenbereich des Deckelelements oder an einer Innenseite der Deckel-Seitenwand) den Arretierungsabschnitt oder einen Teil des Arretierungsabschnitts (z. B. das Hakenelement oder die Neigungsfläche) kontaktieren, berühren, betätigen, bewegen und/oder eine Kraft darauf ausüben, so dass die Arretierung der Rastvorrichtung gelöst wird. Dann kann die Rastvorrichtung durch die erste Federkraft des ersten Federelements zu einer Klemmposition bewegt werden, um eine Sammelschiene zwischen dem Klemmabschnitt und dem Hakenteil zu verklemmen und den Sicherungslasttrennschalter an der Sammelschiene zu befestigen.

Der erfindungsgemäße Sicherungslasttrennschalter hat insbesondere den Vorteil, dass die Rastvorrichtung durch den Arretierungsabschnitt in der Arretierungsposition arretiert werden kann, so dass der Sicherungslasttrennschalter auf einfache Weise relativ zu einer Sammelschiene angeordnet werden kann, um z. B. die Sammelschiene zwischen dem Klemmabschnitt und dem Hakenteil zu positionieren. Dann kann die Arretierung der Rastvorrichtung gelöst werden, z. B. indem ein Benutzer den Arretierungsabschnitt kontaktiert oder betätigt. Infolgedessen kann die Rastvorrichtung durch das erste Federelement von der Arretierungsposition zu der Klemmposition bewegt werden und die Sammelschiene zwischen dem Klemmabschnitt und dem Hakenteil verklemmt werden, so dass der Sicherungslasttrennschalter an der Sammelschiene sicher befestigt wird. Insbesondere muss der Benutzer somit nicht gleichzeitig z. B. mit einer Hand die Rastvorrichtung in der Arretierungsposition festhalten und z. B. mit der anderen Hand die Sammelschiene zwischen dem Klemmabschnitt und dem Hakenteil positionieren, sondern er kann zuerst die Rastvorrichtung in der Arretierungsposition arretieren und dann, z. B. mit nur einer Hand, den Sicherungslasttrennschalter an der Sammelschiene befestigen. Somit wird der erfindungsgemäße Sicherungslasttrennschalter im Hinblick auf die Nutzerfreundlichkeit gegenüber konventionellen Geräten verbessert.

Weiterhin kann der Benutzer, wenn die Rastvorrichtung in der Arretierungsposition arretiert ist, den Sicherungslasttrennschalter auf einfache und sichere Weise von der Sammelschiene trennen, indem er den Sicherungslasttrennschalter relativ zu der Sammelschiene so anordnet, dass die Sammelschiene nicht mehr zwischen dem Klemmabschnitt und dem Hakenelement positioniert ist. Insbesondere muss der Benutzer nicht gleichzeitig z. B. mit einer Hand die Rastvorrichtung in der Arretierungsposition festhalten und z. B. mit der anderen Hand die Sammelschiene aus dem Bereich zwischen dem Klemmabschnitt und dem Hakenelement entnehmen, sondern er kann zuerst die Rastvorrichtung in der Arretierungsposition arretieren und dann, z. B. mit nur einer Hand, den Sicherungslasttrennschalter von der Sammelschiene entfernen. Somit wird die Nutzerfreundlichkeit des Sicherungslasttrennschalters erhöht.

Es kann jedoch vorkommen, dass ein Benutzer, nachdem er den Sicherungslasttrennschalter relativ zu der Sammelschiene angeordnet hat, so dass die Sammelschiene zwischen dem Klemmabschnitt und dem Hakenteil positioniert ist, vergisst, die Arretierung der Rastvorrichtung zu lösen, und anschließend dennoch versucht, das Deckelelement von der geöffneten in die geschlossene Betriebsposition zu bewegen, um den Sicherungslasttrennschalter in Betrieb zu nehmen. Es kann jedoch gefährlich sein, den Sicherungslasttrennschalter in Betrieb zu nehmen, wenn der Sicherungslasttrennschalter nicht sicher an der Sammelschiene befestigt ist. Insbesondere kann der Sicherungslasttrennschalter oder ein an den Sicherungslasttrennschalter angeschlossenes elektrisches Gerät beschädigt werden, wenn sich der Sicherungslasttrennschalter im Betriebszustand von der Sammelschiene löst. Um diese Gefahr zu vermeiden, ist der erfindungsgemäße Sicherungslasttrennschalter so ausgebildet, dass eine Arretierung der Rastvorrichtung in der Arretierungsposition verhindert und/oder gelöst wird, wenn das Deckelelement sich in seiner geschlossenen Betriebsposition befindet oder das Deckelelement in die geschlossene Betriebsposition gebracht wird. Somit kann beim Bewegen des Deckelelements in die geschlossene Betriebsposition die Arretierung der Rastvorrichtung automatisch gelöst werden, auch wenn der Benutzer z. B. vergessen hat, die Arretierung manuell zu lösen. Dadurch wird gewährleistet, dass, wenn das Deckelelement sich in der geschlossenen Betriebsposition befindet, der Sicherungslasttrennschalter stets sicher an der Sammelschiene befestigt ist, auch wenn ein Benutzer vergessen hat, die Arretierung der Rastvorrichtung zu lösen. Somit wird ein sicherer Betrieb des Sicherungslasttrennschalters gewährleistet und die Nutzerfreundlichkeit des Sicherungslasttrennschalter verbessert.

Bei einer bevorzugten Ausführungsform ist das Deckelelement an dem Basiselement befestigt und relativ zu dem Basiselement zwischen der geöffneten Position und der geschlossenen Betriebsposition um eine Deckel-Rotationsachse schwenkbar angeordnet. Dies hat den Vorteil, dass das Deckelelement auf besonders einfache Weise geöffnet und geschlossen werden kann. Ferner wird eine genaue Positionierung des Deckelelements bezüglich des Basiselements während des Schließvorgangs des Deckelelements ermöglicht, so dass insbesondere das Deckelelement während des Schließvorgangs den Arretierungsabschnitt sicher kontaktieren kann, um die Arretierung der Rastvorrichtung zu lösen.

Gemäß der Erfindung umfasst der Arretierungsabschnitt ein Hakenelement. Wenn die Rastvorrichtung in der Arretierungsposition angeordnet ist, ist das Hakenelement relativ zu dem Basiselement zwischen einer Hakenelement-Arretierungsposition zur Arretierung der Rastvorrichtung an dem Basiselement und einer Lösungsposition zur Lösung der Arretierung hin und her bewegbar angeordnet. Das Hakenelement kann insbesondere ein Rasthaken oder ein Schnapphaken oder ein Teil davon sein. Hierdurch kann eine sichere Arretierung der Rastvorrichtung in der Arretierungsposition durch mechanisches Verhaken des Hakenelements an dem Basiselement erreicht werden. Ferner kann ein solches Hakenelement leicht und konstengünstig produziert werden.

Weiterhin kann der Arretierungsabschnitt ein zweites Federelement umfassen. Wenn die Rastvorrichtung in der Arretierungsposition angeordnet ist und das Hakenelement in der Lösungsposition angeordnet ist, kann das zweite Federelement eine zweite Federkraft auf das Hakenelement zum Bewegen des Hakenelements von der Lösungsposition zu der Hakenelement-Arretierungsposition ausüben. Bevorzugt sind das Hakenelement und das zweite Federelement einstückig ausgebildet, und besonders bevorzugt bilden das Hakenelement und das zweite Federelement einen Rasthaken oder Schnapphaken. Das zweite Federelement kann dabei durch einen Abschnitt des Rasthakens aus einem elastischen Material gebildet werden. Auf diese Weise ermöglicht der Arretierungsabschnitt eine sichere Arretierung der Rastvorrichtung in der Arretierungsposition und ein einfaches Lösen der Arretierung, beispielsweise durch Ausüben von Druck auf das Hakenelement entgegen der zweiten Federkraft. Ferner kann ein solcher Arretierungsabschnitt besonders leicht und konstengünstig produziert werden.

Bei einer besonderen Ausführungsform kann das Basiselement eine Basis-Seitenwand umfassen, die in Richtung des Deckelelements, z. B. in Richtung der positiven z-Achse, durch eine Basis-Kante begrenzt wird. Wenn die Rastvorrichtung in der Arretierungsposition angeordnet ist und das Hakenelement in der Hakenelement-Arretierungsposition angeordnet ist, kann das Hakenelement zumindest teilweise auf der Basis-Kante aufliegen und durch das erste Federelement in Richtung der Basis-Kante, d. h. in Richtung der negativen z-Achse, vorgespannt werden. Dadurch kann die Rastvorrichtung sicher an dem Basiselement in der Arretierungsposition arretiert werden.

Wenn die Rastvorrichtung dagegen in einer Klemmposition angeordnet ist, kann das Hakenelement bzw. der Arretierungsabschnitt in einem von der Basis-Seitenwand begrenzten Innenbereich des Sicherungslasttrennschalters angeordnet sein. Insbesondere kann das Deckelelement eine Deckel-Seitenwand umfassen, die in Richtung des Basiselements, d. h. in Richtung der negativen z-Achse, durch eine Deckel-Kante begrenzt wird. Wenn das Deckelelement in der geschlossenen Betriebsposition angeordnet ist, kann die Deckel-Kante auf der Basis-Kante aufliegen. Somit kann eine kompakte und stabile Anordnung des Sicherungslasttrennschalters in dem Betriebszustand des Sicherungslasttrennschalters erreicht werden, und eine versehentliche Betätigung der Rastvorrichtung in dem Betriebszustand kann verhindert werden.

Gemäß der Erfindung umfasst das Hakenelement eine Neigungsfläche, die so ausgebildet ist, dass, wenn das Deckelelement in die geschlossene Betriebsposition gebracht wird, das Deckelelement oder ein Teil des Deckelelements (z. B. die Deckel-Seitenwand oder die Deckel-Kante) die Neigungsfläche kontaktiert, berührt, betätigt, bewegt und/oder eine Kraft darauf ausübt, so dass das Hakenelement entgegen der zweiten Federkraft von der Hakenelement-Arretierungsposition zu der Lösungsposition bewegt wird. Insbesondere kann, wenn das Deckelelement in einer Position nahe der geschlossenen Betriebsposition angeordnet ist, das Deckelelement bereits eine Kraft auf die Neigungsfläche ausüben, so dass das Hakenelement entgegen der zweiten Federkraft von der Hakenelement-Arretierungsposition zu der Lösungsposition bewegt wird. Dadurch kann die Arretierung der Rastvorrichtung gelöst werden, und die Rastvorrichtung kann mittels der ersten Federkraft von der Arretierungsposition zu der Klemmposition bewegt werden. Dies hat den Vorteil, dass der Sicherungslasttrennschalter im geschlossenen Zustand sicher an der Sammelschiene befestigt wird, selbst wenn ein Benutzer vergessen hat, vor dem Schließen des Deckelements die Arretierung der Rastvorrichtung manuell zu lösen. Somit wird ein sicherer Betrieb des Sicherungslasttrennschalters gewährleistet und die Nutzerfreundlichkeit weiter verbessert.

In einer weiteren bevorzugten Ausführungsform umfasst die Rastvorrichtung einen Führungsabschnitt zur Führung der Rastvorrichtung zwischen der Arretierungsposition und den ein oder mehreren Klemmpositionen. Dadurch kann die Rastvorrichtung besonders sicher und präzise zwischen der Arretierungsposition und den ein oder mehreren Klemmpositionen geführt werden, und eine Beschädigung der Rastvorrichtung bzw. des Sicherungslasttrennschalters kann somit verhindert werden. Der Arretierungsabschnitt kann insbesondere an dem Führungsabschnitt angebracht sein und vorzugsweise zumindest teilweise in einer ersten Ausnehmung des Führungsabschnitts angeordnet sein. Hierdurch wird eine besonders kompakte und platzsparende Konfiguration der Rastvorrichtung erreicht. Ferner kann der Führungsabschnitt zwei parallele Führungskanten aufweisen, wobei vorzugsweise der Führungsabschnitt zumindest teilweise in einem Führungsschacht des Basiselements angeordnet und entlang des Führungsschachts linear bewegbar angeordnet ist. Dies ermöglicht eine besonders präzise Führung der Rastvorrichtung zwischen der Arretierungsposition und den ein oder mehreren Klemmpositionen, wodurch die Nutzerfreundlichkeit weiter erhöht wird. Darüber hinaus können der Führungsabschnitt und der Arretierungsabschnitt einstückig ausgebildet sein. Ebenso können der Klemmabschnitt und der Führungsabschnitt einstückig ausgebildet sein. Hierdurch wird jeweils eine sehr kompakte und einfache Bauweise des Rastelements ermöglicht. Ferner wird durch diese Bauweise die Anzahl der notwendigen Bauteile verringert und damit sowohl die Herstellung als auch das Zusammensetzen des Systems vereinfacht.

Bei einer besonderen Ausführungsform umfasst der Führungsabschnitt eine zweite Ausnehmung oder eine Nut für den Eingriff eines Werkzeugs, z. B. eines Schraubenschlüssels, zur manuellen Bewegung der Rastvorrichtung relativ zu dem Basiselement entgegen der ersten Federkraft des ersten Federelements. Dadurch kann der Benutzer die Rastvorrichtung entgegen der ersten Federkraft z. B. von einer Klemmposition zu der Arretierungsposition bewegen, z. B. um den Sicherungslasttrennschalter von der Sammelschiene zu lösen. Es ist selbstverständlich auch möglich, dass anstatt der Ausnehmung für den Eingriff eines Werkzeuges ein anderes Element vorgesehen ist, das beispielsweise auch mit der Hand ergriffen werden kann, um das Element entgegen der Federkraft des ersten Federelements zu bewegen oder ein Lösen von der Sammelschiene zu bewerkstelligen, wobei bevorzugt beispielsweise ein Griff vorgesehen sein kann.

In einer weiteren bevorzugten Ausführungsform umfasst der Klemmabschnitt mehrere Klemmabsätze zum Verklemmen oder Einspannen von Sammelschienen unterschiedlicher Breiten zwischen jeweiligen Klemmabsätzen und dem Hakenteil. Jeder der mehreren Klemmabsätze kann dabei einer der mehreren Klemmpositionen entsprechen, so dass jeweils eine Sammelschiene mit einer bestimmten Breite zwischen dem Hakenteil und einem entsprechenden Klemmabsatz verklemmt werden kann, wenn die Rastvorrichtung in einer entsprechenden Klemmposition angeordnet ist. Somit kann ein flexibler Einsatz des Sicherungslasttrennschalters je nach gewünschter Anwendung erreicht werden.

Bevorzugt umfasst der Klemmabschnitt ein erstes Rastelement, ein zweites Rastelement, das von dem ersten Rastelement beabstandet ist, und ein Verbindungselement, welches das erste Rastelement und das zweite Rastelement miteinander verbindet. Das Verbindungselement kann insbesdonere eine rechteckige, abgerundet-rechteckige, ovale, längliche oder kreuzförmige Querschnittsfläche parallel zu den beiden Rastelementen aufweisen. Durch die beiden Rastelemente, die an verschiedenen Punkten einer Sammelschiene angreifen können, kann die Sammelschiene besonders stabil zwischen dem Klemmabschnitt und dem Hakenteil verklemmt werden. Das Verbindungselement dient dabei dazu, die beiden Rastelemente aneinander zu befestigen und somit die Stabilität der Rastvorrichtung weiter zu erhöhen.

Dabei können das erste Rastelement und das zweite Rastelement jeweils mehrere Klemmabsätze zum Verklemmen oder Einspannen von Sammelschienen unterschiedlicher Breiten umfassen, wobei bevorzugt die mehreren Klemmabsätze des ersten Rastelements stufenförmig ausgebildet sind und die mehreren Klemmabsätze des zweiten Rastelements stufenförmig ausgebildet sind. Jeweils ein Paar aus einem Klemmabsatz des ersten Rastelements und einem Klemmabsatz des zweiten Rastelements kann dabei einer der mehreren Klemmpositionen entsprechen, so dass jeweils eine Sammelschiene mit einer bestimmten Breite zwischen dem Hakenteil und einem entsprechenden Paar aus einem Klemmabsatz des ersten Rastelements und einem Klemmabsatz des zweiten Rastelements verklemmt werden kann, wenn die Rastvorrichtung in einer entsprechenden Klemmposition angeordnet ist. Bevorzugt umfassen das erste und das zweite Rastelement jeweils drei, vier, fünf oder mehr Klemmabsätze zum Befestigen von Sammelschienen unterschiedlicher Breiten. Somit kann der Sicherungslasttrennschalter mittels der zwei Rastelemente an einer Mehrzahl von Sammelschienen unterschiedlicher Breiten befestigt werden, und somit kann ein flexibler Einsatz des Sicherungslasttrennschalters je nach gewünschter Anwendung erreicht werden.

Mindestens ein Rastelement kann einstückig mit dem ersten Federelement ausgebildet sein, wobei bevorzugt das Rastelement ein einstückiges, integrales Kunststoffelement mit dem ersten Federelement ist, das beispielsweise im Spritzgußverfahren hergestellt wird. Durch die einstückige, integrale Ausbildung des Rastelements wird eine sehr kompakte und einfache Bauweise ermöglicht. Ferner wird die Anzahl der notwendigen Bauteile verringert und damit sowohl die Herstellung als auch das Zusammensetzen des Systems vereinfacht.

Bevorzugt ist der Führungsabschnitt einstückig mit dem ersten Rastelement ausgebildet. Insbesondere kann der Führungsabschnitt senkrecht oder im Wesentlichen senkrecht zu dem ersten Rastelement ausgebildet sein. Besonders bevorzugt ist der Führungsabschnitt ein einstückiges, integrales Kunststoffelement mit dem ersten Rastelement, das beispielsweise im Spritzgußverfahren hergestellt wird. Durch die einstückige, integrale Ausbildung des Führungselements wird eine sehr kompakte und einfache Bauweise ermöglicht. Ferner wird die Anzahl der notwendigen Bauteile verringert und damit sowohl die Herstellung als auch das Zusammensetzen des Systems vereinfacht.

Ferner umfassen bei einer bevorzugten Ausführungsform das erste Rastelement und das zweite Rastelement jeweils eine Nut zur Aufnahme eines Kamms des Basiselements oder einen Kamm zum Eingriff in eine Nut des Basiselements. Vorzugsweise ist die Nut bzw. der Kamm jedes Rastelements parallel zu den Führungskanten des Führungsabschnitts ausgebildet.

Dadurch kann die Rastvorrichtung besonders sicher und präzise zwischen der ersten und der Klemmposition geführt werden und die Nutzerfreundlichkeit weiter erhöht werden.

Gemäß einem weiteren bevorzugten Aspekt der Erfindung sind die beiden Rastelemente platten- oder scheibenförmig ausgebildet sind und parallel zueinander angeordnet, wobei vorzugsweise das erste Rastelement und das zweite Rastelement eine identische oder im Wesentlichen identische Form aufweisen. Hierdurch können die Rastelemente besonders kostengünstig und effizient produziert und in den Sicherungslasttrennschalter eingebaut werden. Weiterhin kann auch auch der Führungsabschnitt platten- oder scheibenförmig ausgebildet sein, wobei vorzugsweise eine Dicke des Führungsabschnitts gleich einer Dicke des ersten Rastelements und/oder des zweiten Rastelements ist. Auch dies trägt zu einer kostengünstigen und effizienten Produktion der Rastvorrichtung bei. Weiterhin kann mindestens eines der beiden Rastelemente und/oder der Führungsabschnitt und/oder der Arretierungsabschnitt ein Kunststoffelement sein. Dies ermöglicht eine konstengünstige und effiziente Produktion der Rastvorrichtung, beispielsweise durch ein Spritzgussverfahren.

Diese und weitere Merkmale und Vorteile der Erfindung werden anhand der beigefügten Zeichnungen, die eine besonders vorteilhafte Ausführungsform zeigen, deutlich. Es zeigen:
- Fig. 1: eine perspektivische Ansicht einer Ausführungsform des erfindungsgemäßen Sicherungslasttrennschalters, wobei sich das Deckelelement in der geöffneten Position befindet;
- Fig. 2: eine perspektivische Ansicht einer erfindungsgemäßen Rastvorrichtung;
- Fig. 3: eine weitere perspektivische Ansicht der erfindungsgemäßen Rastvorrichtung aus Fig. 2;
- Fig. 4: eine perspektivische Ansicht von Basiselement und Rastvorrichtung, wobei die Rastvorrichtung relativ zu dem Basiselement in einer Klemmposition angeordnet ist;
- Fig. 5: eine weitere perspektivische Ansicht von Basiselement und Rastvorrichtung in der gleichen Anordnung wie in Fig. 4;
- Fig. 6: einen Ausschnitt des Sicherungslasttrennschalters, wobei die Rastvorrichtung in der Klemmposition angeordnet ist;
- Fig. 7: einen ähnlichen Ausschnitt des Sicherungslasttrennschalters wie in Fig. 6, wobei die Rastvorrichtung jedoch in der Arretierungsposition angeordnet ist;
- Fig. 8: einen vergrößerten Ausschnitt des Sicherungslasttrennschalters, der insbesondere den Arretierungsabschnitt der Rastvorrichtung zeigt, wobei die Rastvorrichtung mittels des Arretierungsabschnitts in der Arretierungsposition arretiert ist;
- Fig. 9: eine weitere Ansicht des Sicherungslasttrennschalters, wobei das Deckelelement zwischen der geöffneten und der geschlossenen Betriebsposition angeordnet ist, und wobei die Rastvorrichtung in der Arretierungsposition arretiert ist;
- Fig. 10: eine weitere Ansicht des Sicherungslasttrennschalters, in der das Deckelelement in der geschlossenen Betriebsposition angeordnet ist.

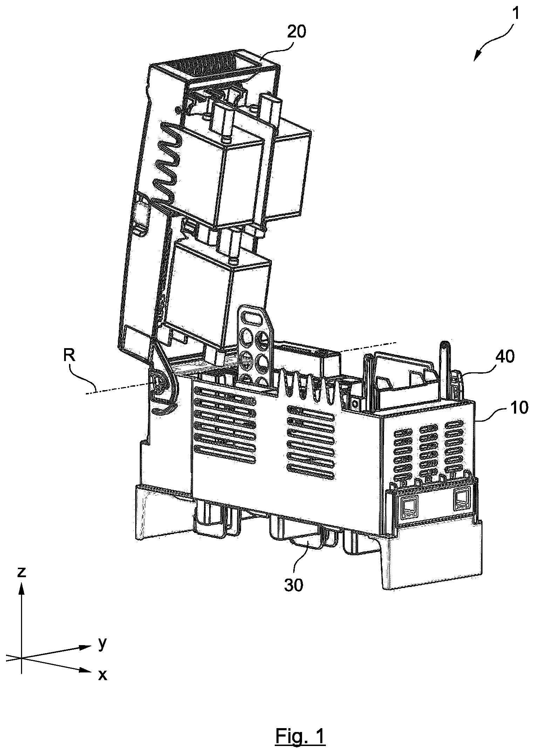

Fig. 1 zeigt eine Ausführungsform eines erfindungsgemäßen Sicherungslasttrennschalters 1, wobei es sich bei diesem Sicherungslasttrennschalter 1 um einen 3-poligen NH-Sicherungslasttrennschalter 1 handelt, der für insgesamt drei Sicherungseinsätze ausgelegt ist. Der Sicherungslasttrennschalter 1 umfasst ein Basiselement 10 und ein Deckelelement 20, in das die drei Sicherungseinsätze eingesetzt werden können. Der Sicherungslasttrennschalter 1 ist ferner so ausgebildet, dass er mittels Hakenteilen 30 an einem Sammelschienensystem befestigt werden kann. Bei der vorliegenden 3-poligen Ausführung umfasst das Sammelschienensystem insgesamt drei Sammelschienen, die jeweils einem Pol entsprechen, und der Sicherungslasttrennschalter umfasst dementsprechend drei Hakenteile 30 jeweils zur Befestigung an einer der drei Sammelschienen. Das Deckelelement 20 ist an dem Basiselement 10 befestigt und zwischen einer geöffneten und einer geschlossenen Betriebsposition um eine Deckel-Rotationsachse R schwenkbar angeordnet. Die Deckel-Rotationsachse R verläuft in dieser Darstellung parallel zur y-Achse. In Fig. 1 befindet sich das Deckelelement 20 in der geöffneten Position. In einem Betriebszustand des Sicherungslasttrennschalters 1 ist das Deckelelement 20 jedoch stets in der geschlossenen Betriebsposition angeordnet, so dass das Deckelelement 20 und das Basiselement 10 einen geschlossenen Innenbereich bilden.

Der Sicherungslasttrennschalter 1 umfasst eine Rastvorrichtung 40, die derart in das Basiselement 10 eingesetzt bzw. mit dem Basiselement 10 verbunden ist, dass sie relativ zu dem Basiselement 10 zwischen einer Arretierungsposition und einer oder mehreren Klemmpositionen und her bewegbar angeordnet ist. In Fig. 1 ist die Rastvorrichtung 40 insbesondere in der Arretierungsposition angeordnet. Wenn sich die Rastvorrichtung 40 in der Arretierungsposition befindet, kann der Sicherungslasttrennschalters 1 auf einfache Weise relativ zu einer Sammelschiene angeordnet werden, so dass die Sammelschiene zwischen einem Klemmabschnitt 410 der Rastvorrichtung 40 und einem Hakenteil 30 positioniert werden kann. In dieser Ausführungsform ist die Rastvorrichtung 40 demjenigen Hakenteil 30 zugeordnet, das unter den drei Hakenteilen 30 am weitesten von der Deckel-Rotationsachse R entfernt ist. Die ein oder mehreren Klemmpositionen der Rastvorrichtung 40 dienen jeweils dem Verklemmen einer zwischen dem Klemmabschnitt 410 und dem Hakenteil 30 positionierten Sammelschiene, wie weiter unten ausführlicher beschrieben wird. In der hier gezeigten Ausführungsform ist die Rastvorrichtung 40 zwischen der Arretierungsposition und den ein oder mehreren Klemmpositionen entlang der z-Achse linear verschiebbar angeordnet. Das heißt, die Arretierungsposition und die ein oder mehreren Klemmpositionen befinden sich alle auf einer Linie parallel zur z-Achse. Die Arretierungsposition ist dabei weiter in Richtung der positiven z-Achse angeordnet als die ein oder mehreren Klemmpositionen, so dass, wenn die Rastvorrichtung 40 in der Arretierungsposition angeordnet ist, ein Abstand zwischen der Rastvorrichtung 40 und dem Hakenteil 30 größer ist, als wenn die Rastvorrichtung 40 in einer Klemmposition angeordnet ist. In einer alternativen Ausführungsform kann die Rastvorrichtung 40 in einem Winkel zur z-Achse zwischen der Arretierungsposition und den ein oder mehreren Klemmpositionen linear verschiebbar angeordnet sein. In einer weiteren alternativen Ausführungsform kann die Rastvorrichtung 40 auch an dem Basiselement 10 befestigt und relativ zu dem Basiselement 10 zwischen der Arretierungsposition und den ein oder mehreren Klemmpositionen um eine Rastvorrichtungs-Rotationsachse schwenkbar angeordnet sein.

Die Rastvorrichtung 40 ist federbelastet, insbesondere mittels eines ersten Federelements (nicht dargestellt). Das erste Federelement spannt die Rastvorrichtung 40 in jeder Position in Richtung des Hakenteils 30, d. h. in die negative z-Richtung, vor. Mit anderen Worten ist das erste Federelement so ausgebildet, dass es in jeder Position eine erste Federkraft auf die Rastvorrichtung 40 in Richtung des Hakenteils 30 ausübt. Wenn die Rastvorrichtung 40 in der Arretierungsposition angeordnet ist und eine Arretierung der Rastvorrichtung 40 in dieser Position gelöst wird, kann die Rastvorrichtung 40 mittels der ersten Federkraft von der Arretierungsposition zu einer Klemmposition bewegt werden. Wenn die Rastvorrichtung 40 in einer Klemmposition angeordnet ist, kann eine Sammelschiene mittels der ersten Federkraft zwischen dem Klemmabschnitt 410 und dem Hakenteil 30 verklemmt werden, um den Sicherungslasttrennschalter 1 an der Sammelschiene zu befestigen.

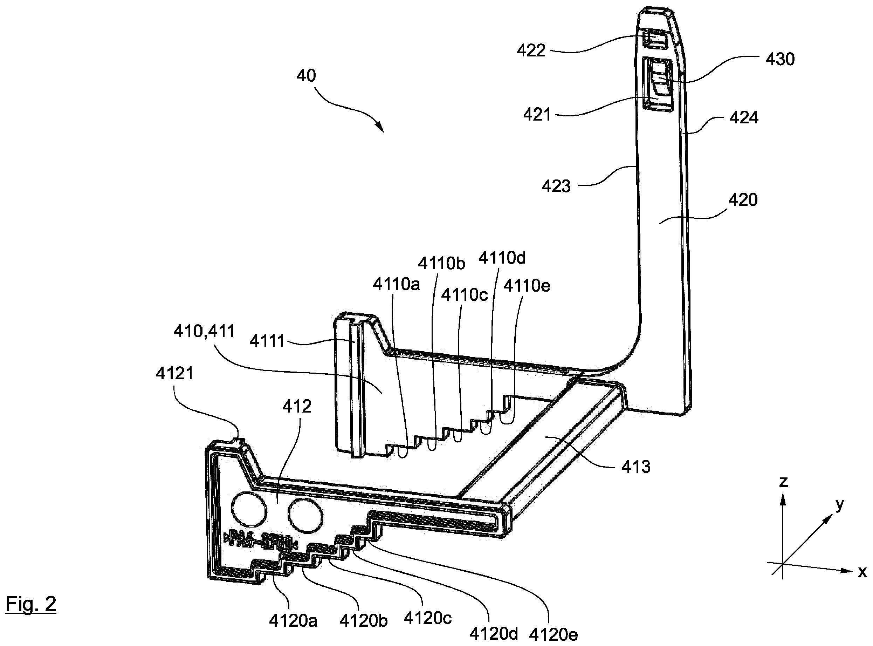

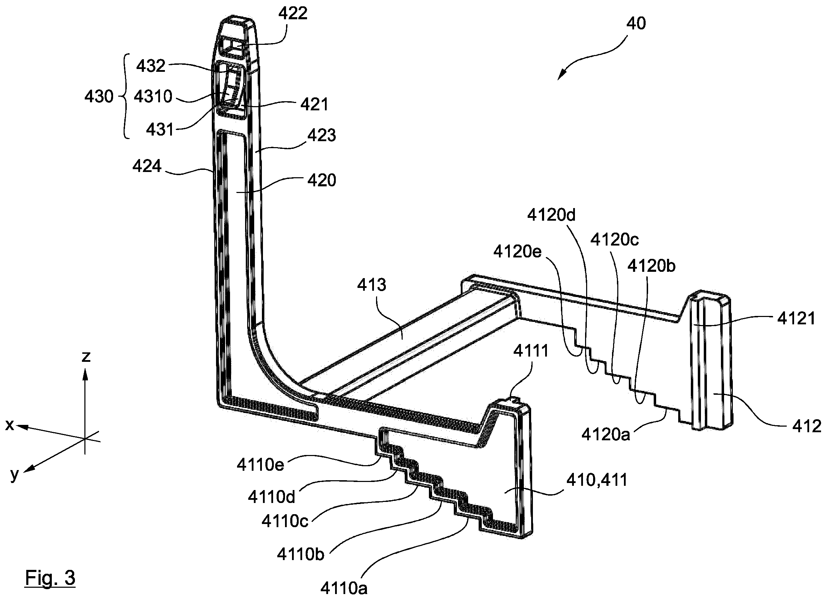

Fig. 2 und Fig. 3 zeigen verschiedene perspektivische Ansichten einer Ausführungsform der Rastvorrichtung 40. Die Rastvorrichtung 40 umfasst insbesondere einen Klemmabschnitt 410 zum Verklemmen oder Einspannen einer Sammelschiene zwischen dem Klemmabschnitt 410 und einem Hakenteil 30, wenn sich die Rastvorrichtung 40 in einer Klemmposition befindet, sowie einen Arretierungsabschnitt 430 zur lösbaren Arretierung der Rastvorrichtung 40 an dem Basiselement in der Arretierungsposition. Ferner umfasst die Rastvorrichtung 40 einen Führungsabschnitt 20 zum Führen der Rastvorrichtung 40 zwischen der Arretierungsposition und der Klemmposition.

Der Klemmabschnitt 410 umfasst in dieser Ausführungsform ein erstes Rastelement 411, ein zweites Rastelement 412, das von dem ersten Rastelement 411 beabstandet ist, und ein Verbindungselement 413, welches das erste Rastelement 411 und das zweite Rastelement 412 miteinander verbindet. Die beiden Rastelemente 411, 412 sind platten- oder scheibenförmig ausgebildet und weisen eine im Wesentlichen identische Form auf. Ferner sind die beiden Rastelemente 411, 412 parallel zueinander angeordnet. Die beiden Rastelemente 411, 412 weisen jeweils eine Mehrzahl von Klemmabsätzen 4110a-e, 4120a-e zum Befestigen von Sammelschienen unterschiedlicher Breiten auf, wobei jeweils ein Klemmabsatz des ersten Rastelements einem Klemmabsatz des zweiten Rastelements entspricht. In der gezeigten Ausführungsform weisen die beiden Rastelemente 411, 412 jeweils fünf Klemmabsätze 4110a-e, 4120a-e zum Befestigen von fünf unterschiedlich breiten Sammelschienen auf, jedoch kann die Anzahl der Klemmabsätze je nach gewünschter Anwendung variieren. Ferner ist die Mehrzahl von Klemmabsätzen 4110a-e, 4120a-e jedes Rastelements 411, 412 stufenförmig ausgebildet. In der gezeigten Ausführungsform verlaufen die vertikalen Stufenkanten vertikal, also in z-Richtung, während die horizontalen Stufenkanten exakt in horizontaler Richtung, also in x-Richtung, verlaufen, so dass sie einen Innenwinkel von ca. 90° bilden. Alternativ können die horizontalen Stufenkanten gegenüber der x-Richtung leicht geneigt sein, so dass eine vertikale Stufenkante und eine horizontale Stufenkante einen Winkel bilden, der kleiner ist als 90° ist und beispielsweise 85° beträgt. Mittels der beiden Rastelemente 411, 412 kann der Sicherungslasttrennschalter 1 an einer Mehrzahl von Sammelschienen unterschiedlicher Breiten befestigt werden. Genauer kann jeweils eine Sammelschiene mit einer bestimmten Breite zwischen dem Hakenteil 30 und einem entsprechenden Paar aus einem Klemmabsatz 4110a-e des ersten Rastelements 411 und einem Klemmabsatz 4120a-e des zweiten Rastelements 412 verklemmt werden. Durch die beiden parallel angeordneten Rastelemente 411, 412, die an voneinander beabstandeten Punkten einer Sammelschiene angreifen, kann die Sammelschiene besonders stabil zwischen dem Klemmabschnitt 410 und einem Hakenteil 30 verklemmt werden.

Das Verbindungselement 413 weist in dieser Ausführungsform eine abgerundet-rechteckige Querschnittsfläche parallel zu den beiden Rastelementen auf. Das Verbindungselement dient insbesondere dazu, die beiden Rastelemente 411, 412 aneinander zu befestigen und somit eine besonders stabile Befestigung von Sammelschienen zwischen dem Hakenteil 30 und den beiden Rastelementen 411, 412 zu ermöglichen.

Ferner weisen die beiden Rastelemente 411, 412 in dieser Ausführungsform jeweils einen Kamm 4111, 4121 zum Eingriff in eine Nut des Basiselements 10 auf. Alternativ können die beiden Rastelemente 411, 412 jeweils eine Nut zur Aufnahme eines Kamms des Basiselements 10 aufweisen. Die Kämme 4111, 4121 bzw. die Nuten der beiden Rastelemente 411, 412 sind jeweils parallel zu den Führungskanten 423, 424 des Führungselements 420 ausgebildet und erstrecken sich somit in z-Richtung. Hierdurch kann die Rastvorrichtung 40 sicher und präzise zwischen der ersten und der Klemmposition geführt werden.

Der Führungsabschnitt 420 ist in dieser Ausführungsform plattenförmig und einstückig mit dem ersten Rastelement 411 ausgebildet. Er erstreckt sich entlang der z-Achse und ist im Wesentlichen senkrecht zu dem ersten Rastelement 411 ausgebildet. Er weist zwei parallele Führungskanten 423, 424 entlang der z-Richtung auf. Der Führungsabschnitt 420 dient insbesondere dazu, die Rastvorrichtung 40 zwischen der Arretierungsposition und Klemmposition linear zu führen. Insbesondere kann der Führungsabschnitt 420 in einem Führungsschacht 70 des Basiselements 10, der sich ebenfalls entlang der z-Richtung erstreckt, angeordnet sein und entlang des Führungsschachts 70 linear bewegbar sein.

Der Führungsabschnitt 420 weist hier eine erste Ausnehmung 421 auf, in welcher der Arretierungsabschnitt 430 angeordnet ist. Der Arretierungsabschnitt 430 kann einstückig mit dem Führungsabschnitt 420 ausgebildet sein. Der Arretierungsabschnitt 430 umfasst ein Hakenelement 431 und ein zweites Federelement 432, die zusammen einen Rasthaken oder Schnapphaken bilden, wobei das zweite Federelement 432 durch einen Abschnitt des Rasthakens aus elastischem Material gebildet wird. Der Arretierungsabschnitt 430 dient insbesondere dazu, die Rastvorrichtung 40 relativ zu dem Basiselement 10 in der Arretierungsposition zu arretieren, wie weiter unten ausführlicher beschrieben wird.

Der Führungsabschnitt 420 weist ferner eine zweite Ausnehmung 422 auf, in die ein Benutzer mit einem Werkzeug, z. B. einem Schraubenschlüssel, eingreifen kann, um die Rastvorrichtung 40 manuell entgegen der ersten Federkraft relativ zu dem Basiselement 10 zu bewegen. Dadurch kann der Benutzer z. B. die Rastvorrichtung 40 von der Klemmposition zu der Arretierungsposition entgegen der ersten Federkraft bewegen, um die Sammelschiene aus dem Bereich zwischen dem Hakenteil 30 und dem Klemmabschnitt 410 zu entfernen und so den Sicherungslasttrennschalter 1 von der Sammelschiene zu lösen.

Die beiden Rastelemente 411, 412 und/oder der Führungsabschnitt 420 und/oder der Arretierungsabschnitt 430 können jeweils aus Kunststoff hergestellt sein. Insbesondere kann die gesamte Rastvorrichtung 40 ein integrales Kunststoffelement sein, das beispielsweise im Spritzgußverfahren hergestellt wird.

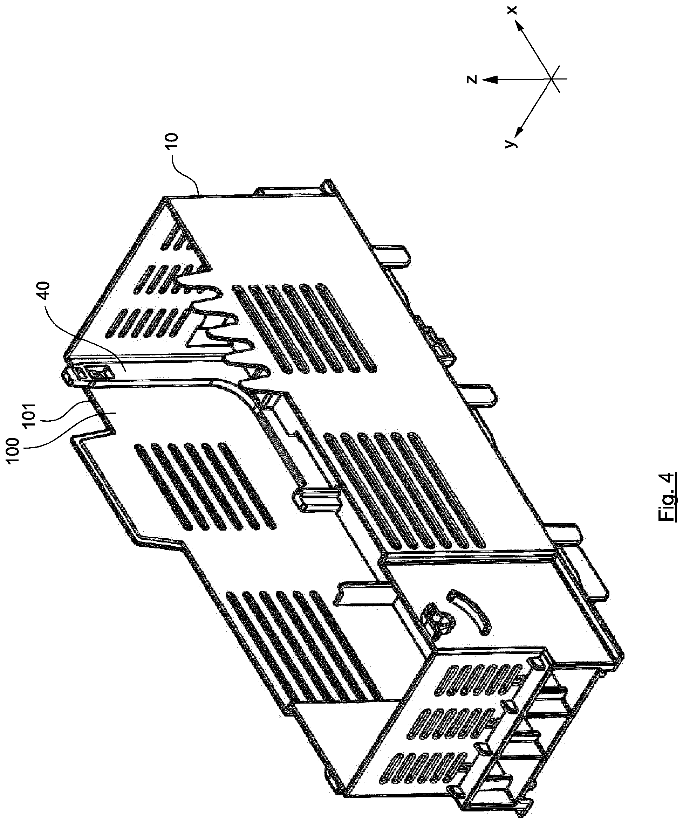

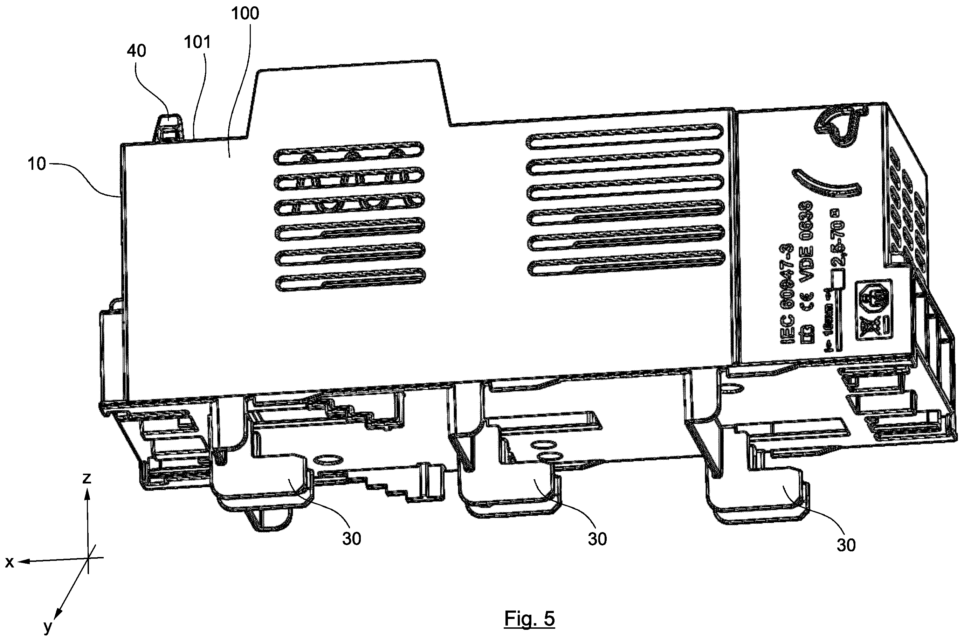

Fig. 4 und 5 zeigen jeweils das Basiselement 10 mit der Rastvorrichtung 40, die sich in einer Klemmposition befindet. Das Basiselement 10 weist eine Basis-Seitenwand 100 auf, die in Richtung des Deckelelements 20, d. h. in der positiven z-Richtung, durch eine Basis-Kante 101 begrenzt wird. Wenn die Rastvorrichtung 40 wie in Fig. 4 und 5 in der Klemmposition angeordnet ist, befindet sich der Arretierungsabschnitt 430 einschließlich des Hakenelements 431 in einem Innenbereich des Sicherungslasttrennschalters 1, der von der Basis-Seitenwand 100 begrenzt wird. Dagegen ragt die zweite Ausnehmung 422 des Führungsabschnitts 420 über die Basis-Seitenwand 100 hinaus, so dass ein Benutzer auch dann, wenn sich die Rastvorrichtung 40 in der Klemmposition befindet, mit einem Werkzeug in die zweite Ausnehmung 422 eingreifen kann, um die Rastvorrichtung 40 von der Klemmposition zu der Arretierungsposition zu bewegen. Ferner ragt, wenn sich die Rastvorrichtung 40 in einer Klemmposition befindet, mindestens ein Klemmabsatz 4110a-e, 4120a-e jedes Rastelements 411, 412 unter einer Bodenfläche des Basiselements 10 hervor, so dass eine Sammelschiene zwischen den jeweiligen Klemmabsätzen 4110a-e, 4120a-e und dem Hakenteil 30 verklemmt werden kann.

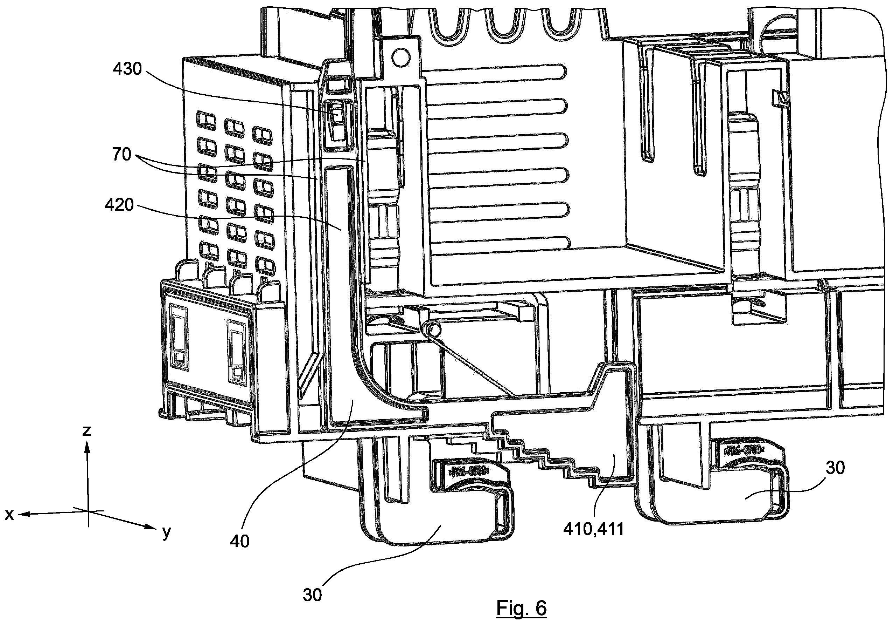

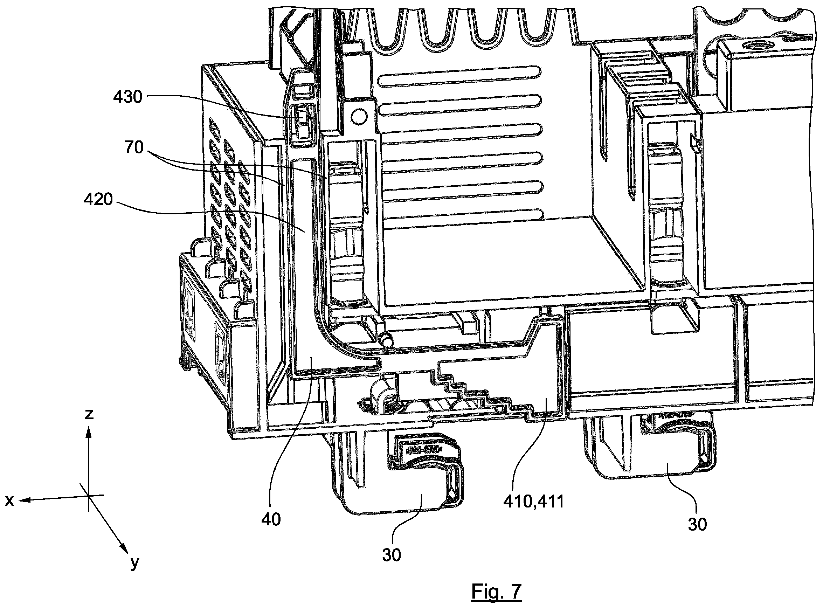

Fig. 6 und 7 zeigen jeweils einen Ausschnitt des Sicherungslasttrennschalters 1, wobei in Fig. 6 die Rastvorrichtung 40 in einer Klemmposition angeordnet ist, während sie in Fig. 7 in der Arretierungsposition angeordnet ist. In Fig. 6 und 7 wurde jeweils die Basis-Seitenwand 100 weggelassen, damit Bestandteile im Inneren des Sicherungslasttrennschalters 1 besser erkennbar sind. In Fig. 6 ist die Rastvorrichtung 40 in derjenigen Klemmposition angeordnet, die sich unter der Mehrzahl von Klemmpositionen am weitesten in Richtung des Hakenteils 30, d. h. in Richtung der negativen z-Achse, befindet. Wenn sich die Rastvorrichtung 40 in dieser Klemmposition befindet, kann eine Sammelschiene mit einer kleinsten Breite unter einer Mehrzahl von Sammelschienen, an denen der Sicherungslasttrennschalter 1 befestigt werden kann, zwischen dem Hakenteil 30 und demjenigen Paar von Klemmabsätzen 4110a-e, 4120a-e des ersten Rastelements 411 und des zweiten Rastelements 412 verklemmt werden, das unter mehreren Paaren von Klemmabsätzen 4110a-e, 4120a-e am weitesten in Richtung der positiven z-Achse und der positiven x-Achse angeordnet ist. In Fig. 7 ragt dagegen keiner der Klemmabsätze 4110a-e, 4112a-e unter der Bodenfläche des Sicherungslasttrennschalters 1 hervor. Wenn die Rastvorrichtung 40, wie in Fig. 7 gezeigt, in der Arretierungsposition angeordnet ist, ist somit ein Abstand zwischen dem Klemmabschnitt 410 und dem Hakenteil 30 größer, als wenn die Rastvorrichtung 40 in einer Klemmposition angeordnet ist. Ferner ist in Fig. 6 und Fig. 7 der Führungsschacht 70 zu sehen, in dem der Führungsabschnitt 420 der Rastvorrichtung 40 angeordnet ist. Die beiden Führungskanten 423, 424 liegen jeweils an einer entsprechenden Innenkante des Führungsschachts 70 an, so dass der Führungsabschnitt 420 linear entlang des Führungsschachts 70 in z-Richtung bewegbar ist, um die Rastvorrichtung 40 zwischen der Arretierungsposition und den ein oder mehreren Klemmpositionen hin und her zu bewegen.

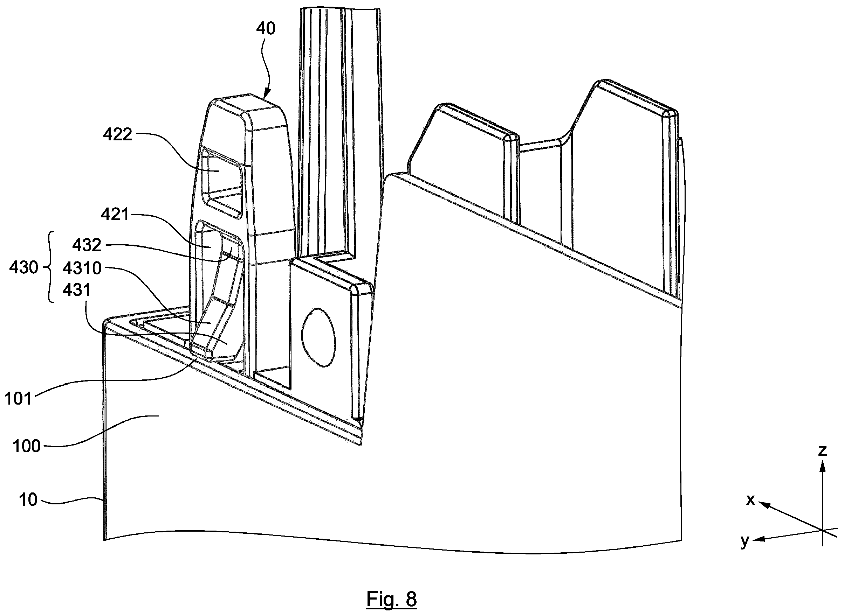

Fig. 8 zeigt einen vergrößerten Ausschnitt des Sicherungslasttrennschalters 1, wenn die Rastvorrichtung 40 in der Arretierungsposition angeordnet ist und mittels des Arretierungsabschnitts 430 an dem Basiselement 20 in dieser Position arretiert ist. Der Arretierungsabschnitt 430 umfasst insbesondere ein Hakenelement 431 und ein zweites Federelement 432. In dieser Ausführungsform sind das Hakenelement 431 und das zweite Federelement 432 einstückig als ein Rasthaken ausgebildet, der in einer Ausnehmung des Führungsabschnitts 420 angeordnet und befestigt ist. Das zweite Federelement 432 entspricht dabei einem elastischen Abschnitt des Rasthakens.

Wenn die Rastvorrichtung 40, wie in Fig. 8 gezeigt, in der Arretierungsposition angeordnet ist, ist das Hakenelement 431 relativ zu dem Basiselement 10 zwischen einer Hakenelement-Arretierungsposition zur Arretierung der Rastvorrichtung 40 in der Arretierungsposition und einer Lösungsposition zur Lösung der Arretierung der Rastvorrichtung 40 hin und her bewegbar angeordnet (vorzugsweise linear oder im Wesentlichen linear entlang der y-Richtung, d. h. insbesondere senkrecht zur linearen Bewegungsrichtung der Rastvorrichtung 40 zwischen der Arretierungsposition und den ein oder mehreren Klemmpositionen). Wenn die Rastvorrichtung 40 in der Arretierungsposition angeordnet ist und das Hakenelement 431 in der Lösungsposition angeordnet ist, übt das zweite Federelement 432 eine zweite Federkraft auf das Hakenelement 431 aus (vorzugsweise entlang der y-Richtung oder im Wesentlichen entlang der y-Richtung), so dass des Hakenelement 431 von der Lösungsposition zu der Hakenelement-Arretierungsposition bewegt wird, sofern keine entgegengesetzte äußere Kraft auf das Hakenelement 431 wirkt. In Fig. 8 ist das Hakenelement 431 in der Hakenelement-Arretierungsposition angeordnet. Dabei liegt das Hakenelement 431 auf der Basis-Kante 101 auf und wird durch die erste Federkraft in Richtung der Basis-Seitenwand 100 vorgespannt. Dadurch wird die Rastvorrichtung 40 in der Arretierungsposition arretiert.

Wenn die Rastvorrichtung 40, wie in Fig. 8 gezeigt, durch den Arretierungsabschnitt 430 in der Arretierungsposition arretiert ist, kann der Benutzer den Sicherungslasttrennschalter 1 relativ zu einer Sammelschiene auf sichere und einfache Weise anordnen bzw. mittels des Hakenteils 30 an einer Sammelschiene einhängen, so dass die Sammelschiene zwischen dem Klemmabschnitt 410 und dem Hakenteil 30 positioniert wird. Anschließend kann der Benutzer die Arretierung der Rastvorrichtung 40 lösen, indem er das Hakenelement 431 von der Hakenelement-Arretierungsposition zu der Lösungsposition bewegt, z. B. indem er eine äußeren Kraft auf das Hakenelement 431 ausübt und das Hakenelement 431 entgegen der zweiten Federkraft in den Innenbereich des Sicherungslasttrennschalters 1 drückt. Wenn das Hakenelement 431 in der Lösungsposition angeordnet ist, liegt das Hakenelement 431 nicht mehr auf der Basis-Kante 101 auf und die Arretierung der Rastvorrichtung 40 ist somit gelöst. Die Rastvorrichtung 40 wird dann mittels der ersten Federkraft von der Arretierungsposition zu einer Klemmposition bewegt, und eine Sammelschiene kann mittels der ersten Federkraft zwischen dem Klemmabschnitt 410 und dem Hakenteil 430 verklemmt werden. Man beachte, dass die Rastvorrichtung nach dem Lösen der Arretierung durch die erste Federkraft automatisch in diejenige Klemmposition bewegt wird, die zu einer zwischen dem Klemmabschnitt 410 und dem Hakenteil 30 positionierten Sammelschiene passt, so dass die Sammelschiene zwischen den passenden Klemmabsätzen 4110a-e, 4111a-e der beiden Rastelemente 411, 412 und dem Hakenteil 30 zuverlässig und sicher verklemmt wird. Der Benutzer braucht daher nur den Sicherungslasttrennschalter 1 auf das Sammelschienensystem aufzusetzen und die Arretierung der Rastvorrichtung 40 zu lösen, ohne vorher feststellen zu müssen, welche Breite die Sammelschiene hat.

Wenn die Rastvorrichtung 40 in der Klemmposition angeordnet ist, befindet sich der Arretierungsabschnitt 430 im Inneren des Sicherungslasttrennschalters 1. Wenn der Benutzer den Sicherungslasttrennschalter 1 wieder von der Sammelschiene lösen möchte, kann er zunächst die Rastvorrichtung 40 manuell oder mithilfe eines Werkzeugs, das er z. B. in die zweite Ausnehmung 421 des Führungsabschnitts 420 einführt, von der Klemmposition zu der Arretierungsposition entgegen der ersten Federkraft bewegen. Wenn sich die Rastvorrichtung 40 in der Arretierungsposition befindet, ragt dann der Arretierungsabschnitt 430 in z-Richtung über die Basis-Kante 101 der Basis-Seitenwand 100 hinaus. Daher wird das Hakenelement 431 durch die Federkraft des zweiten Federelements 432 entlang der y-Richtung in den Außenbereich des Sicherungslasttrennschalters 1 gedrückt, bis das Hakenelement 431 auf der Basis-Kante 101 aufliegt und die Rastvorrichtung 40 in der Arretierungsposition arretiert ist. Dann kann der Benutzer den Sicherungslasttrennschalter 1 wieder einfach und sicher von der Sammelschiene entfernen.

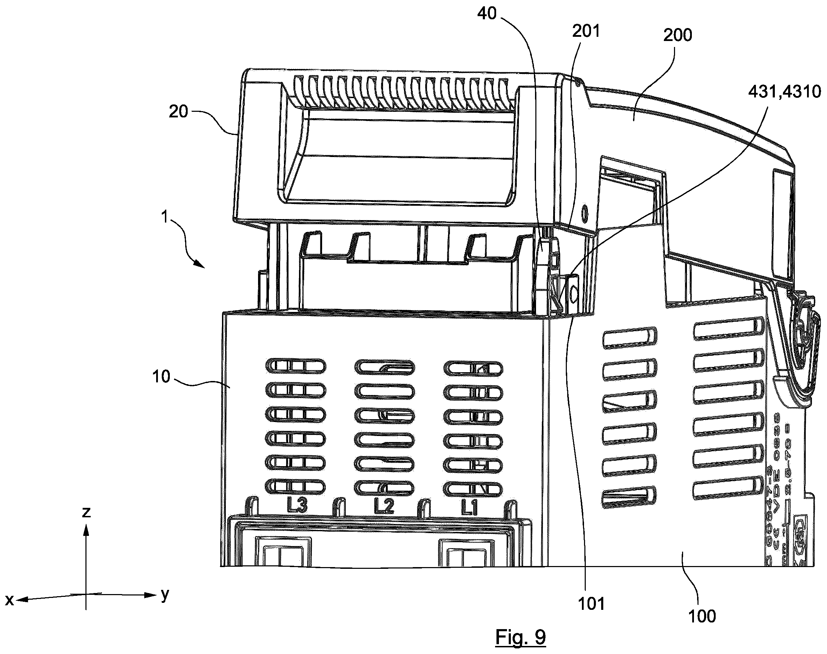

Fig. 9 zeigt eine weitere perspektivische Ansicht des Sicherungslasttrennschalters 1, wobei die Rastvorrichtung 40 mittels des Arretierungsabschnitts 430 in der Arretierungsposition arretiert ist. Wie in Fig. 8 und Fig. 9 zu sehen ist, umfasst das Hakenelement 431 eine Neigungsfläche 4310, die in einen Außenbereich des Sicherungslasttrennschalters (d. h. hier in die positive y-Richtung) und die positive z-Richtung weist. Wenn die Rastvorrichtung 40 in der Arretierungsposition arretiert ist und das Deckelelement 20 von der geöffneten Position in die geschlossene Betriebsposition bewegt wird, übt das Deckelelement 20 eine Kraft auf die Neigungsfläche 4310 aus, so dass das Hakenelement 431 entgegen der zweiten Federkraft von der Hakenelement-Arretierungsposition zu der Lösungsposition bewegt wird und somit die Arretierung der Rastvorrichtung 40 gelöst wird.

Genauer umfasst das Deckelelement 20 eine Deckel-Seitenwand 200, die in Richtung des Basiselements 10, d. h. in Richtung der negativen z-Achse, durch eine Deckel-Kante 201 begrenzt wird. Wenn die Rastvorrichtung 40 durch den Arretierungsabschnitt 430 in der Arretierungsposition arretiert ist und das Deckelelement 20 von der geöffneten Position in die geschlossene Betriebsposition bewegt wird, kontaktiert die Deckel-Kante 201, wenn sich das Deckelelement 20 nahe der geschlossenen Betriebsposition befindet, die Neigungsfläche 4310 des Rasthakens 431 und übt eine Kraft darauf aus, so dass das Hakenelement 631 beim Schließen des Deckelelements 20 automatisch in die Lösungsposition gedrückt wird und somit die Arretierung der Rastvorrichtung 40 gelöst wird. Die Rastvorrichtung 40 wird dann mittels der ersten Federkraft von der Arretierungsposition zu der Klemmposition bewegt, und die Sammelschiene wird mittels der ersten Federkraft zwischen dem Klemmabschnitt 410 und dem Hakenteil 430 verklemmt. Auf diese Weise wird der Sicherungslasttrennschalter 1 sicher an der Sammelschiene befestigt, auch wenn der Benutzer vor dem Schließen des Deckelelements 20 vergessen hat, die Arretierung der Rastvorrichtung 40 zu lösen.

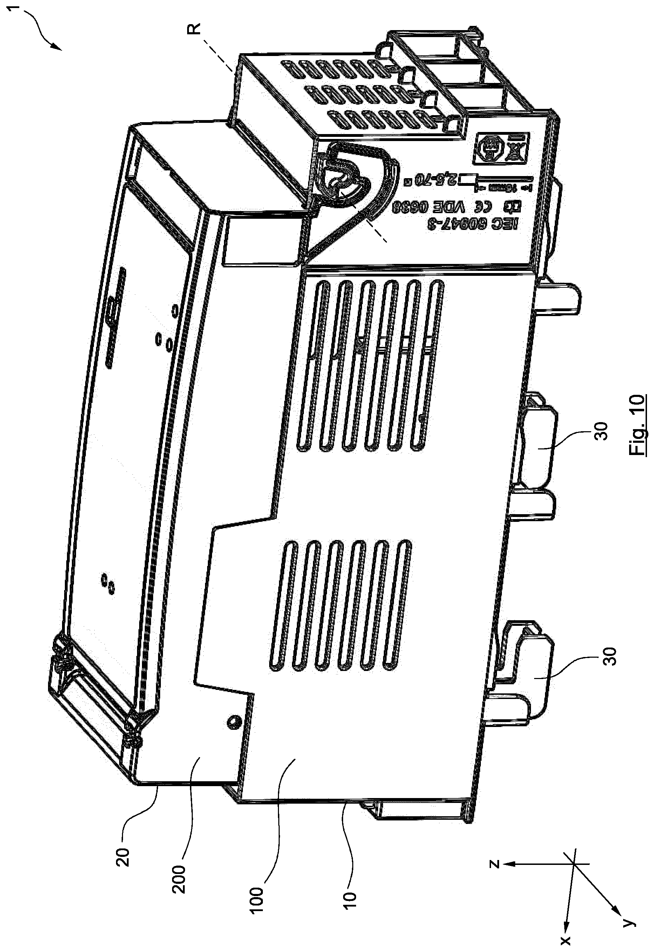

Fig. 10 zeigt eine Ansicht des Sicherungslasttrennschalters 1, wenn das Deckelelement in der geschlossenen Betriebsposition angeordnet ist. In diesem Zustand liegt die Deckel-Seitenwand 200 auf der Basis-Seitenwand 100 auf, und das Basiselement 10 und das Deckelelement 20 bilden einen geschlossenen Innenbereich, welcher insbesondere die Rastvorrichtung 40 und das erste Federelement beherbergt, so dass diese Teile des Sicherungslasttrennschalters 1 vor Beschädigungen durch äußere Einwirkungen geschützt sind.

### Liste der Bezugszeichen

- 1: Sicherungslasttrennschalter
- 10: Basiselement
- 100: Basis-Seitenwand
- 101: Basis-Kante
- 20: Deckelelement
- 200: Deckel-Seitenwand
- 201: Deckel-Kante
- 30: Hakenteil
- 40: Rastvorrichtung
- 410: Klemmabschnitt
- 411: erstes Rastelement
- 412: zweites Rastelement
- 4110a-e, 412oa-e: Klemmabsatz
- 4111, 4121: Nut
- 413: Verbindungselement
- 420: Führungsabschnitt
- 421: erste Ausnehmung
- 422: zweite Ausnehmung
- 423, 424: Führungskante
- 430: Arretierungsabschnitt
- 431: Hakenelement
- 4310: Neigungsfläche
- 432: zweites Federelement
- 70: Führungsschacht
- R: Deckel-Rotationsachse

## Patentansprüche

1. Sicherungslasttrennschalter (1) zur Befestigung an Sammelschienen einer oder mehrerer unterschiedlicher Breiten,
wobei der Sicherungslasttrennschalter (1) ein Basiselement (10), ein Deckelelement (20), ein Hakenteil (30), eine Rastvorrichtung (40) und ein erstes Federelement umfasst,
wobei die Rastvorrichtung (40) einen Klemmabschnitt (410) zum Verklemmen oder Einspannen einer Sammelschiene zwischen dem Klemmabschnitt (410) und dem Hakenteil (30) sowie einen Arretierungsabschnitt (430) zur lösbaren Arretierung der Rastvorrichtung (40) an dem Basiselement (10) in einer Arretierungsposition umfasst,
wobei das Deckelelement (20) relativ zu dem Basiselement (10) zwischen einer geöffneten Position und einer geschlossenen Betriebsposition hin und her bewegbar angeordnet ist,
wobei die Rastvorrichtung (40) relativ zu dem Basiselement (10) hin und her bewegbar angeordnet ist zwischen der Arretierungsposition zum Anordnen des Sicherungslasttrennschalters (1) relativ zu einer Sammelschiene, so dass die Sammelschiene zwischen dem Klemmabschnitt (410) und dem Hakenteil (30) positioniert werden kann, und einer oder mehreren Klemmpositionen zum Verklemmen oder Einspannen der Sammelschiene zwischen dem Klemmabschnitt (410) und dem Hakenteil (30),
wobei das erste Federelement so ausgebildet ist, dass es die Rastvorrichtung (40) in jeder Position in Richtung des Hakenteils (30) vorspannt, **dadurch gekennzeichnet, dass**
der Sicherungslasttrennschalter (1) so ausgebildet ist, dass eine Arretierung der Rastvorrichtung (40) in der Arretierungsposition verhindert und/oder gelöst wird, wenn das Deckelelement (20) sich in seiner geschlossenen Betriebsposition befindet oder in die geschlossene Betriebsposition gebracht wird,
wobei der Arretierungsabschnitt (430) ein Hakenelement (431) umfasst,
wobei, wenn die Rastvorrichtung (40) in der Arretierungsposition angeordnet ist, das Hakenelement (431) relativ zu dem Basiselement (10) zwischen einer Hakenelement-Arretierungsposition zur Arretierung der Rastvorrichtung (40) an dem Basiselement (10) und einer Lösungsposition zur Lösung der Arretierung hin und her bewegbar angeordnet ist,
wobei das Hakenelement (431) eine Neigungsfläche (4310) umfasst, die so ausgebildet ist, dass, wenn das Deckelelement (20) in die geschlossene Betriebsposition gebracht wird, das Deckelelement (20) die Neigungsfläche (4310) kontaktiert und/oder eine Kraft auf die Neigungsfläche (4310) ausübt, so dass das Hakenelement (431) entgegen der zweiten Federkraft von der Hakenelement-Arretierungsposition zu der Lösungsposition bewegt wird.

2. Sicherungslasttrennschalter (1) nach Anspruch 1, wobei das Deckelelement (20) an dem Basiselement (10) befestigt ist und relativ zu dem Basiselement (10) zwischen der geöffneten Position und der geschlossenen Betriebsposition um eine Deckel-Rotationsachse (R) schwenkbar angeordnet ist.

3. Sicherungslasttrennschalter (1) nach Anspruch 1 oder 2, wobei der Arretierungsabschnitt (430) ein zweites Federelement (432) umfasst, wobei,
wenn die Rastvorrichtung (40) in der Arretierungsposition angeordnet ist und das Hakenelement (431) in der Lösungsposition angeordnet ist, das zweite Federelement (432) so ausgebildet ist, dass es eine zweite Federkraft auf das Hakenelement (431) zum Bewegen des Hakenelements (431) von der Lösungsposition zu der Hakenelement-Arretierungsposition ausübt,
wobei vorzugsweise das Hakenelement (431) und das zweite Federelement (432) einstückig ausgebildet sind, wobei besonders bevorzugt das Hakenelement (431) und das zweite Federelement (432) einen Rasthaken bilden.

4. Sicherungslasttrennschalter (1) nach Ansprüche 1 bis 3, wobei das Basiselement (10) eine Basis-Seitenwand (100) umfasst, die in Richtung des Deckelelements (20) durch eine Basis-Kante (101) begrenzt wird,
wobei, wenn die Rastvorrichtung (40) in der Arretierungsposition angeordnet ist und das Hakenelement (431) in der Hakenelement-Arretierungsposition angeordnet ist, das Hakenelement (431) zumindest teilweise auf der Basis-Kante (101) aufliegt und durch das erste Federelement in Richtung der Basis-Kante (101) vorgespannt wird.

5. Sicherungslasttrennschalter (1) nach einem der vorstehenden Ansprüche, wobei die Rastvorrichtung (40) einen Führungsabschnitt (420) zur Führung der Rastvorrichtung (40) zwischen der Arretierungsposition und den ein oder mehreren Klemmpositionen umfasst.

6. Sicherungslasttrennschalter (1) nach Anspruch 5, wobei der Arretierungsabschnitt (430) an dem Führungsabschnitt (420) angebracht ist, wobei vorzugsweise der Arretierungsabschnitt (430) zumindest teilweise in einer ersten Ausnehmung (421) des Führungsabschnitts (420) angeordnet ist.

7. Sicherungslasttrennschalter (1) nach Anspruch 5 oder 6, wobei der Führungsabschnitt (420) zwei parallele Führungskanten (423, 424) aufweist, wobei vorzugsweise der Führungsabschnitt (420) zumindest teilweise in einem Führungsschacht (70) des Basiselements (10) angeordnet und entlang des Führungsschachts (70) linear bewegbar angeordnet ist,
und/oder wobei der Führungsabschnitt (420) und der Arretierungsabschnitt (430) einstückig ausgebildet sind, wobei vorzugsweise der Klemmabschnitt (410) und der Führungsabschnitt (420) einstückig ausgebildet sind,
und/oder wobei der Führungsabschnitt (420) eine zweite Ausnehmung (422) für den Eingriff eines Werkzeugs zur manuellen Bewegung der Rastvorrichtung (40) relativ zu dem Basiselement (10) entgegen einer ersten Federkraft des ersten Federelements umfasst.

8. Sicherungslasttrennschalter (1) nach einem der vorstehenden Ansprüche, wobei der Klemmabschnitt (410) eine Mehrzahl von Klemmabsätzen (411oa-e, 4120a-e) zum Verklemmen oder Einspannen von Sammelschienen unterschiedlicher Breiten zwischen jeweiligen Klemmabsätzen (411oa-e, 4120a-e) und dem Hakenteil (30) umfasst.

9. Sicherungslasttrennschalter (1) nach einem der vorstehenden Ansprüche, wobei der Klemmabschnitt (410) ein erstes Rastelement (411), ein zweites Rastelement (412), das von dem ersten Rastelement (411) beabstandet ist, und ein Verbindungselement (413), welches das erste Rastelement (411) und das zweite Rastelement (412) miteinander verbindet, umfasst,
wobei vorzugsweise das erste Rastelement (411) und das zweite Rastelement (412) jeweils eine Mehrzahl von Klemmabsätzen (411oa-e, 4120a-e) zum Verklemmen oder Einspannen von Sammelschienen unterschiedlicher Breiten umfasst, wobei besonders bevorzugt die Mehrzahl von Klemmabsätzen 411oa-e des ersten Rastelements 411 und die Mehrzahl von Klemmabsätzen 4120a-e des zweiten Rastelements 412 jeweils stufenförmig ausgebildet sind.

10. Sicherungslasttrennschalter (1) nach Anspruch 9, wobei der Führungsabschnitt (420) einstückig mit dem ersten Rastelement (411) ausgebildet ist, wobei vorzugsweise der Führungsabschnitt (420) senkrecht oder im Wesentlichen senkrecht zu dem ersten Rastelement (410) ausgebildet ist.

11. Sicherungslasttrennschalter (1) nach Anspruch 9 oder 10, wobei das erste Rastelement (411) und das zweite Rastelement (412) jeweils eine Nut (4111, 4121) zur Aufnahme eines Kamms des Basiselements (10) oder einen Kamm zum Eingriff in eine Nut des Basiselements (10) umfasst, wobei vorzugsweise die Nut (4112, 4122) bzw. der Kamm jedes Rastelements (411, 412) parallel zu den Führungskanten (423, 424) ausgebildet ist,
und/oder wobei die beiden Rastelemente (411, 412) platten- oder scheibenförmig ausgebildet sind und parallel zueinander angeordnet sind, wobei vorzugsweise das erste Rastelement (411) und das zweite Rastelement (412) eine identische Form aufweisen.

12. Sicherungslasttrennschalter (1) nach einem der Ansprüche 5 bis 11, wobei der Führungsabschnitt (420) platten- oder scheibenförmig ausgebildet ist, wobei vorzugsweise eine Dicke des Führungsabschnitts (420) gleich einer Dicke des ersten Rastelements (411) und/oder des zweiten Rastelements (412) ist.

13. Sicherungslasttrennschalter (1) nach einem der vorstehenden Ansprüche, wobei der Klemmabschnitt (410) ein erstes Rastelement (411) und ein zweites Rastelement (412) umfasst und/oder die Rastvorrichtung (40) einen Führungsabschnitt (420) umfasst, und wobei mindestens eines der beiden Rastelemente (411, 412) und/oder der Führungsabschnitt (420) und/oder der Arretierungsabschnitt (430) ein Kunststoffelement ist.

## Claims

1. A fuse load break switch (1) for fastening to busbars of one or more different widths,
wherein the fuse load break switch (1) comprises a base element (10), a cover element (20), a hook part (30), a latching device (40) and a first spring element,
wherein the latching device (40) comprises a clamping portion (410) for clamping or gripping a busbar between the clamping portion (410) and the hook part (30), and a locking portion (430) for detachably locking the latching device (40) on the base element (10) in a locking position,
wherein the cover element (20) is arranged movably back and forth relative to the base element (10) between an open position and a closed operating position,
wherein the latching device (40) is arranged movably back and forth relative to the base element (10) between the locking position, for arranging the fuse load break switch (1) relative to a busbar so that the busbar can be positioned between the clamping portion (410) and the hook part (30), and one or more clamping positions, for clamping or gripping the busbar between the clamping portion (410) and the hook part (30),
wherein the first spring element is designed such that it preloads the latching device (40) in the direction of the hook part (30) in every position,
**characterised in that**
the fuse load break switch (1) is designed such that locking of the latching device (40) in the locking position is prevented and/or released when the cover element (20) is in its closed operating position or is brought into the closed operating position,
wherein the locking portion (430) comprises a hook element (431),
wherein, when the latching device (40) is in the locking position, the hook element (431) is arranged movably back and forth relative to the base element (10) between a hook element locking position for locking the latching device (40) on the base element (10) and a release position for releasing the locking,
wherein the hook element (431) comprises an inclination face (4310), which is designed such that, when the cover element (20) is brought into the closed operating position, the cover element (20) contacts the inclination face (4310) and/or exerts a force on the inclination face (4310) so that the hook element (431) is moved from the hook element locking position to the release position counter to the second spring force.

2. The fuse load break switch (1) according to Claim 1, wherein the cover element (20) is fastened to the base element (10) and is arranged pivotably about a cover rotational axis (R) relative to the base element (10) between the open position and the closed operating position.

3. The fuse load break switch (1) according to Claim 1 or **2,** wherein the locking portion (430) comprises a second spring element (432), wherein
when the latching device (40) is in the locking position and the hook element (431) is in the release position, the second spring element (432) is designed such that it exerts a second spring force on the hook element (431) to move the hook element (431) from the release position to the hook element locking position,
wherein preferably the hook element (431) and the second spring element (432) are designed as a single piece, wherein particularly preferably the hook element (431) and the second spring element (432) form a latching hook.

4. The fuse load break switch (1) according to Claims 1 to 3, wherein the base element (10) comprises a base side wall (100), which is delimited in the direction of the cover element (20) by a base edge (101),
wherein, when the latching device (40) is in the locking position and the hook element (431) is in the hook element locking position, the hook element (431) rests at least partially on the base edge (101) and is preloaded in the direction of the base edge (101) by the first spring element.

5. The fuse load break switch (1) according to one of the preceding claims, wherein the latching device (40) comprises a guiding portion (420) for guiding the latching device (40) between the locking position and the one or more clamping positions.

6. The fuse load break switch (1) according to Claim 5, wherein the locking portion (430) is attached to the guiding portion (420), wherein preferably the locking portion (430) is arranged at least partially in a first recess (421) of the guiding portion (420).

7. The fuse load break switch (1) according to Claim 5 or 6, wherein the guiding portion (420) has two parallel guiding edges (423, 424), wherein preferably the guiding portion (420) is arranged at least partially in a guiding shaft (70) of the base element (10) and is arranged linearly movably along the guiding shaft (70),
and/or wherein the guiding portion (420) and the locking portion (430) are designed as a single piece, wherein preferably the clamping portion (410) and the guiding portion (420) are designed as a single piece,
and/or wherein the guiding portion (420) comprises a second recess (422) for the engagement of a tool for the manual movement of the latching device (40) relative to the base element (10) counter to a first spring force of the first spring element.

8. The fuse load break switch (1) according to one of the preceding claims, wherein the clamping portion (410) comprises a plurality of clamping shoulders (4110a-e, 4120a-e) for clamping or gripping busbars of different widths between respective clamping shoulders (4110a-e, 4120a-e) and the hook part (30).

9. The fuse load break switch (1) according to one of the preceding claims, wherein the clamping portion (410) comprises a first latching element (411), a second latching element (412), which is spaced from the first latching element (411), and a connecting element (413), which connects the first latching element (411) and the second latching element (412) to one another,
wherein preferably the first latching element (411) and the second latching element (412) each comprise a plurality of clamping shoulders (4110a-e, 4120a-e) for clamping or gripping busbars of different widths, wherein particularly preferably the plurality of clamping shoulders (4110a-e) of the first latching element (411) and the plurality of clamping shoulders (4120a-e) of the second latching element (412) are each step-shaped.

10. The fuse load break switch (1) according to Claim 9, wherein the guiding portion (420) is designed as a single piece with the first latching element (411), wherein preferably the guiding portion (420) is formed perpendicularly or substantially perpendicularly to the first latching element (410).

11. The fuse load break switch (1) according to Claim 9 or 10, wherein the first latching element (411) and the second latching element (412) each comprise a groove (4111, 4121) for receiving a comb of the base element (10) or a comb for engagement in a groove of the base element (10), wherein preferably the groove (4112, 4122) or the comb of each latching element (411, 412) is formed parallel to the guiding edges (423, 424),
and/or wherein the two latching elements (411, 412) are plate- or disc-shaped and are arranged parallel to one another, wherein preferably the first latching element (411) and the second latching element (412) have an identical shape.

12. The fuse load break switch (1) according to one of Claims 5 to 11, wherein the guiding portion (420) is plate- or disc-shaped, wherein preferably a thickness of the guiding portion (420) is equal to a thickness of the first latching element (411) and/or of the second latching element (412).

13. The fuse load break switch (1) according to one of the preceding claims, wherein the clamping portion (410) comprises a first latching element (411) and a second latching element (412), and/or the latching device (40) comprises a guiding portion (420), and wherein at least one of the two latching elements (411, 412) and/or the guiding portion (420) and/or the locking portion (430) is a plastic element.

## Revendications

1. Sectionneur de coupure en charge de sécurité (1) destiné à être fixé à des barres collectrices d'une ou plusieurs largeurs différentes,
dans lequel le sectionneur de coupure en charge de sécurité (1) comprend un élément de base (10), un élément de couvercle (20), une partie de crochet (30), un dispositif d'encliquetage (40) et un premier élément de ressort,
dans lequel le dispositif d'encliquetage (40) comprend une portion de serrage (410) pour le serrage d'une barre collectrice entre la portion de serrage (410) et la partie de crochet (30) ainsi qu'une portion de blocage (430) pour le blocage amovible du dispositif d'encliquetage (40) sur l'élément de base (10) dans une position de blocage,
dans lequel l'élément de couvercle (20) est disposé de façon à pouvoir effectuer un mouvement de va-et-vient par rapport à l'élément de base (10) entre une position ouverte et une position de fonctionnement fermée,
dans lequel le dispositif d'encliquetage (40) est disposé de façon à pouvoir effectuer un mouvement de va-et-vient par rapport à l'élément de base (10) entre la position de blocage pour la disposition du sectionneur de coupure en charge de sécurité (1) par rapport à une barre collectrice, de sorte que la barre collectrice peut être positionné entre la portion de serrage (410) et la partie de crochet (30), et une ou plusieurs positions de serrage pour le serrage de la barre collectrice entre la portion de serrage (410) et la partie de crochet (30),
dans lequel le premier élément de ressort est conçu de façon à précontraindre le dispositif d'encliquetage (40) dans chaque position en direction de la partie de crochet (30),
**caractérisé en ce que**
le sectionneur de coupure en charge de sécurité (1) est conçu de façon à empêcher et/ou à desserrer un blocage du dispositif d'encliquetage (40) dans la position de blocage lorsque l'élément de couvercle (20) se trouve dans une position de fonctionnement fermée ou est amené dans la position de fonctionnement fermée,
dans lequel la portion de blocage (430) comprend un élément de crochet (431),
dans lequel, lorsque le dispositif d'encliquetage (40) est disposé dans la position de blocage, l'élément de crochet (431) est disposé de façon à pouvoir effectuer un mouvement de va-et-vient par rapport à l'élément de base (10) entre une position de blocage d'élément de crochet pour le blocage du dispositif d'encliquetage (40) sur l'élément de base (10) et une position de desserrage pour le desserrage du blocage,
dans lequel l'élément de crochet (431) comprend une surface inclinée (4310) qui est conçue de sorte que, lorsque l'élément de couvercle (20) est amené vers la position de fonctionnement fermée, l'élément de couvercle (20) est mis en contact avec la surface inclinée (4310) et/ou exerce une force sur la surface inclinée (4310), de sorte que l'élément de crochet (431) est déplacé contre la deuxième force de ressort de la position de blocage d'élément de crochet vers la position de desserrage.

2. Sectionneur de coupure en charge de sécurité (1) selon la revendication 1, dans lequel l'élément de couvercle (20) est fixé à l'élément de base (10) et est disposé de manière pivotante par rapport à l'élément de base (10) entre la position ouverte et la position de fonctionnement fermée autour d'un axe de rotation de couvercle (R).

3. Sectionneur de coupure en charge de sécurité (1) selon la revendication 1 ou 2, dans lequel la portion de blocage (430) comprend un deuxième élément de ressort (432), dans lequel
lorsque le dispositif d'encliquetage (40) est disposé dans la position de blocage et l'élément de crochet (431) est disposé dans la position de desserrage, le deuxième élément de ressort (432) est conçu de façon à exercer une deuxième force de ressort sur l'élément de crochet (431) pour le déplacement de l'élément de crochet (431) de la position de desserrage vers la position de blocage de l'élément de crochet,
dans lequel, de préférence, l'élément de crochet (431) et le deuxième élément de ressort (432) sont réalisés d'une seule pièce, dans lequel, de préférence l'élément de crochet (431) et le deuxième élément de ressort (432) forment un crochet d'encliquetage.

4. Sectionneur de coupure en charge de sécurité (1) selon l'une des revendications 1 à 3, dans lequel l'élément de base (10) comprend une paroi latérale de base (100) qui est limitée en direction de l'élément de couvercle (20) par une arête de base (101),
dans lequel, lorsque le dispositif d'encliquetage (40) est disposé dans la position de blocage et l'élément de crochet (431) est disposé dans la position de blocage de l'élément de crochet, l'élément de crochet (431) s'appuie au moins partiellement sur l'arête de base (101) et est précontraint par le premier élément de ressort en direction de l'arête de base (101).

5. Sectionneur de coupure en charge de sécurité (1) selon l'une des revendications précédentes, dans lequel le dispositif d'encliquetage (40) comprend une portion de guidage (420) pour le guidage du dispositif d'encliquetage (40) entre la position de blocage et la ou les positions de serrage.

6. Sectionneur de coupure en charge de sécurité (1) selon la revendication 5, dans lequel la portion de blocage (430) est montée sur la portion de guidage (420), dans lequel, de préférence, la portion de blocage (430) est disposée au moins partiellement dans un premier évidement (421) de la portion de guidage (420).

7. Sectionneur de coupure en charge de sécurité (1) selon la revendication 5 ou 6, dans lequel la portion de guidage (420) comprend deux arêtes de guidage parallèles (423, 424), dans lequel, de préférence, la portion de guidage (420) est disposée au moins partiellement dans un puits de guidage (70) de l'élément de base (10) et est disposé de manière mobile linéairement le long du puits de guidage (70),
et/ou dans lequel la portion de guidage (420) et la portion de blocage (430) sont réalisées d'une seule pièce, dans lequel, de préférence, la portion de serrage (410) et la portion de guidage (420) sont réalisées d'une seule pièce,
et/ou dans lequel la portion de guidage (420) comprend un deuxième évidement (422) pour l'emboîtement d'un outil pour le déplacement manuel du dispositif d'encliquetage (40) par rapport à l'élément de base (10) contre une première force de ressort du premier élément de ressort.

8. Sectionneur de coupure en charge de sécurité (1) selon l'une des revendications précédentes, dans lequel la portion de serrage (410) comprend une pluralité d'épaulements de serrage (4110a-e - 4120a-e) pour le serrage de barres collectrices de différentes largeurs entre des épaulements de serrage (4110a-e - 4120a-e) respectifs et la partie de crochet (30).

9. Sectionneur de coupure en charge de sécurité (1) selon l'une des revendications précédentes, dans lequel la portion de serrage (410) comprend un premier élément d'encliquetage (411), un deuxième élément d'encliquetage (412), qui est distant du premier élément d'encliquetage (411), et un élément de liaison (413), qui relie entre eux le premier élément d'encliquetage (411) et le deuxième élément d'encliquetage (412),
dans lequel, de préférence, le premier élément d'encliquetage (411) et le deuxième élément d'encliquetage (412) comprennent respectivement une pluralité d'épaulements de serrage (4110a-e - 4120a-e) pour le serrage de barres collectrices de différentes largeurs, dans lequel, plus particulièrement de préférence, la pluralité d'épaulements de serrage 4110a-e du premier élément d'encliquetage 411 et la pluralité d'épaulements de serrage 4120a-e du deuxième élément d'encliquetage 412 sont réalisées respectivement de manière échelonnée.

10. Sectionneur de coupure en charge de sécurité (1) selon la revendication 9, dans lequel la portion de guidage (420) est réalisée d'une seule pièce avec le premier élément d'encliquetage (411), dans lequel, de préférence, la portion de guidage (420) est réalisée de manière perpendiculaire ou globalement perpendiculaire au premier élément d'encliquetage (410).

11. Sectionneur de coupure en charge de sécurité (1) selon la revendication 9 ou 10, dans lequel le premier élément d'encliquetage (411) et le deuxième élément d'encliquetage (412) comprennent respectivement une rainure (4111, 4121) pour le logement d'un peigne de l'élément de base (10) ou d'un peigne destiné à être emboîté dans une rainure de l'élément de base (10), dans lequel, de préférence, la rainure (4112, 4122) ou le peigne de chaque élément d'encliquetage (411, 412) est réalisé parallèlement aux arêtes de guidage (423, 424),
et/ou dans lequel les deux éléments d'encliquetage (411, 412) présentent une forme de plaque ou de disque et sont disposés parallèlement entre eux, dans lequel, de préférence le premier élément d'encliquetage (411) et le deuxième élément d'encliquetage (412) présentent une forme identique.

12. Sectionneur de coupure en charge de sécurité (1) selon l'une des revendications 5 à 11, dans lequel la portion de guidage (420) présente une forme de plaque ou de disque, dans lequel, de préférence, une épaisseur de la portion de guidage (420) est égale à une épaisseur du premier élément d'encliquetage (411) et/ou du deuxième élément d'encliquetage (412).

13. Sectionneur de coupure en charge de sécurité (1) selon l'une des revendications précédentes, dans lequel la portion de serrage (410) comprend un premier élément d'encliquetage (411) et un deuxième élément d'encliquetage (412) et/ou le dispositif d'encliquetage (40) comprend une portion de guidage (420) et dans lequel au moins un des deux éléments d'encliquetage (411, 412) et/ou la portion de guidage (420) et/ou la portion de blocage (430) est un élément en matière plastique.
